# EUROPÄISCHE PATENTSCHRIFT

(11) **EP 2 270 340 B1**
(45) Veröffentlichungstag und Bekanntmachung des Hinweises auf die Patenterteilung: **09.01.2013**
(21) Anmeldenummer: 09008683.6
(22) Anmeldetag: 02.07.2009
(51) Int. Cl.: F15B 13/01

(54) **Vorgesteuertes Hydrauliksitzventil**
Pilot-operated hydraulic seat valve
Soupape hydraulique pilotée à siège

(43) Veröffentlichungstag der Anmeldung: 05.01.2011
(73) Patentinhaber: HAWE Hydraulik SE, 81673 München (DE)
(72) Erfinder: Imlauer, Markus, 83624 Otterfing (DE)
(74) Vertreter: Grünecker, Kinkeldey, Stockmair & Schwanhäusser

(56) Entgegenhaltungen:
- EP-A1- 0 837 275
- WO-A1-2009/061166
- DE-A1- 4 239 321
- DE-A1- 19 755 120
- FR-A- 1 305 081
- US-B1- 6 328 275

## Beschreibung

Die Erfindung betrifft ein Hydrauliksitzventil der im Oberbegriff des Patentanspruchs 1 angegebenen Art.

Ein derartiges Hydrauliksitzventil ist aus EP 0 837 275 A bekannt. In der Schließstellung des Pilotventils wird der Pilotkegel mit Druck von der Lastdruckseite auf dem Querschnitt des Pilotsitzes beaufschlagt, so dass eine in Schließrichtung des Pilotventils wirkende Kraft vorliegt. Sobald das Pilotventil geöffnet ist, sind der Anker und der Pilotkegel im Wesentlichen axialkraftfrei, so dass der Anker des Proportionalmagneten nur gegen die Regelfeder arbeitet und keine aussagefähige Rückmeldung über den Wert der Druckdifferenz zwischen der Lastdruckseite und der Niederdruckseite erhält. Beim Regeln des Hauptkolbens relativ zum Ventilsitz in Kombination mit der Regelung des Pilotventils lässt sich dadurch keine ideale Lastunabhängigkeit erzielen oder keine eindeutige Anpassung an benutzerspezifische Anforderungen vornehmen. Es wäre jedoch wünschenswert, die durch das Hydrauliksitzventil strömende Menge entweder vollständig lastunabhängig oder angepasst an benutzerspezifische Anforderungen regeln zu können.

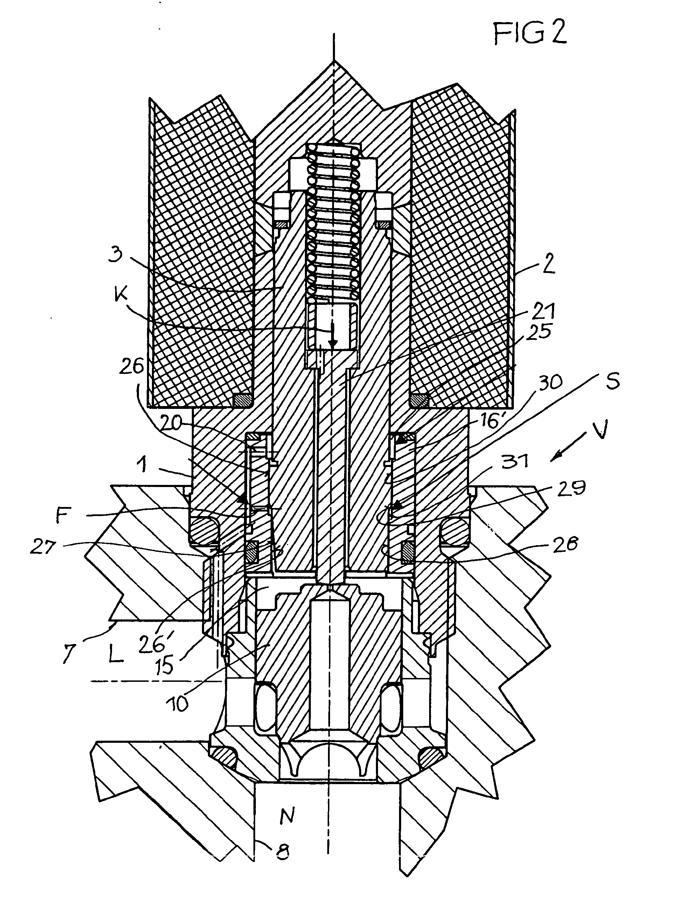

Das aus DE 197 55 120 A bekannte Hydrauliksitzventil, das auch zur proportionalen Senkensteuerung eines Hubzylinders verwendbar ist, weist in einigen Ausführungsformen (Fig. 2 bis 13) einen mit dem Pilotkegel bewegungsgekoppelten Steuerkolben im Hauptkolben auf. Der Steuerkolben weist radiale Vorsteuerdurchgänge und am Außenumfang platzierte Steuerkanten auf, die über den Stellhub mit der zwischen der Lastdruckseite und der Steuerkammer des Hauptkolbens angeordneten Festdrossel so zusammenarbeiten, dass zwischen der Festdrossel und der Steuerkammer eine zusätzlich Stelldrossel gebildet wird, deren Größe über den Stellhub des Ankers variabel ist. Da der Steuerkolben wie auch der Pilotkegel druckausgeglichen sind, erzeugt eine Variation der Größe der Stelldrossel keine Kraft am Pilotkegel oder Anker. Bei weiteren Ausführungsformen (Fig. 14 bis 16) ist der Steuerkolben weggelassen, und wird eine Stelldrossel zwischen der zwischen der Lastdruckseite und der Steuerkammer angeordneten Festdrossel und der Niederdruckseite definiert, und zwar entweder zwischen dem Pilotventilsitz und einer Steuerfläche am Pilotkegel, oder zwischen einer Steuerfläche am Pilotkegel und einem Durchgang im Hauptkolben zwischen der Festdrossel und dem Pilotventilsitz, oder zwischen der Festdrossel und dem Pilotventilsitz über Steuerkerben im Pilotkegel und eine Steuerkante im Inneren des Hauptkolbens. Eine Variation der Größe der Stelldrossel erzeugt am Pilotkegel und über diesem am Anker entweder eine Kraft, die sich über den Stellhub in der Richtung umkehrt, oder erst am Ende des Öffnungs-Stellhubs entgegengesetzt zur Betätigungsrichtung des Proportionalmagneten progressiv zunimmt.

Bei dem aus US 6 328 275 B1 bekannten Hydrauliksitzventil, dessen Steuerkammer wechselseitig mit dem höheren Druck an der Lastdruckseite oder der Niederdruckseite beaufschlagbar ist, resultieren im Wesentlichen die gleichen Nachteile wie für EP 0 837 275 A erwähnt. Hier ist allerdings der Pilotsitz in einem elastischen Körper ausgebildet, der bei geschlossenem Pilotventil die Kraft auf dem Pilotkegel kontert, indem er sich verformt.

Um die Menge vollständig lastunabhängig oder angepasst an benutzerspezifische Anforderungen regeln zu können, wird beispielsweise gemäß DE 24 239 321 A in einem Hubmodul zur Genkenregelung ein 2-Wegestromregler eingesetzt, der aus einer Proportionalblende und einer Druckwaage besteht. Jedoch ist der 2-Wegestromregler baulich aufwendig, teuer und in der Absperrstellung nicht leckagefrei. Ferner lässt sich in bestimmten Betriebsphasen hoher Staudruck über den 2-Wegestromregler nicht vermeiden, der einen signifikanten Leistungsverlust bedeutet.

Weiterer Stand der Technik ist enthalten in FR 1 305 081 A und WO 2009/061166 A.

Der Erfindung liegt die Aufgabe zugrunde, ein Hydrauliksitzventil der eingangs genannten Art anzugeben, das auf baulich einfache Weise lastdruckunabhängig regelt und sich an benutzerspezifische Anforderungen anpassen lässt.

Die gestellte Aufgabe wird erfindungsgemäß mit den Merkmalen des Patentanspruchs 1 gelöst.

Der Vorteil der zusätzlich angeordneten Stelldrossel, deren momentane Größe von der Position des Ankers des Proportionalmagneten abhängt, liegt darin, dass auch bei geöffnetem Pilotventil eine variierende Kraft am Anker erzeugt wird, die diesem eine aussagefähige Rückmeldung zum Wert der Druckdifferenz zwischen der Lastdruckseite und der Niederdruckseite liefert, so dass der Proportionalmagnet im Zusammenspiel mit der Regelfeder entweder vollständig lastunabhängig und gegebenenfalls sogar entsprechend benutzerspezifischen Anforderungen regeln kann. Dabei ist entweder zwischen dem Anker und der ein Ende des Ankers aufnehmenden, mit der Festdrossel kommunizierenden Steuerkammer eine Hilfssteuerkammer vorgesehen, die von der Steuerkammer durch eine Trennwand separiert und vom Anker begrenzt ist, in welcher ein Durchgang für den Pilotkegel vorgesehen ist, der einen Steuerflächenabschnitt aufweist, der in Richtung zum Pilotsitz zunehmend und auch relativ zur Achse des Pilotkegels ansteigt, so dass die Stelldrossel durch den Steuerflächenabschnitt und den Durchgang definiert wird, oder erstreckt sich der Anker bis in die Steuerkammer, und ist er mit zumindest einem Dichtabschnitt in einer stationären, die Steuerkammer begrenzenden und mit der Festdrossel kommunizierenden Dichtführung abgedichtet verschiebbar, so dass die Stelldrossel durch die Dichtführung und den Anker definiert wird. Das Hydrauliksitzventil ist in stromlosem Zustand des Proportionalmagneten geschlossen. Es wird in anderen Worten über die Stelldrossel, die der Anker direkt oder über den Pilotkegel verstellt, dem Anker des Proportionalmagneten in Form der hydraulisch aus dem Lastdruck erzeugten Kraft ein zusätzlicher Regelparameter gegeben, mit welchem der Proportionalmagnet eine aussagefähige Information über den Wert der Druckdifferenz zwischen der Lastdruckseite und der Niederdruckseite oder zu Änderungen des Lastdrucks erhält, um die Menge ideal regeln zu können. Bei jedem festgesetzten Wert der Bestromung des Proportionalmagneten lässt sich auf diese Weise entweder die Druckdifferenz zwischen der Lastdruckseite und der Niederdruckseite lastunabhängig konstant halten oder lastunabhängig anwenderspezifischen Anforderungen entsprechend variieren.

Bei einer zweckmäßigen Ausführungsform ist das Hydrauliksitzventil in stromlosem Zustand des Proportionalmagneten durch die Regelfeder leckagefrei zugehalten. Die aus dem Lastdruck abgeleitete, variierende Kraft wirkt beim Regeln der Menge in Schließrichtung. Dies bietet den Vorteil, dass die exakte Regelung unter Rückmeldung des Lastdrucks bereits bei einem sehr kleinen Öffnungsgrad beginnt und über den gesamten Stellhub fortgesetzt wird.

Bei einer alternativen Ausführungsform ist das Hydrauliksitzventil in stromlosem Zustand des Proportionalmagneten durch die Regelfeder offen. Die aus dem Lastdruck bei bestromtem Proportionalmagneten abgeleitete, variierende Kraft am Anker wirkt in Öffnungsrichtung, so dass die lastunabhängige Regelung der Menge vom vollem Öffnungsgrad bis zum Schließen des Pilotventils bzw. bis zur leckagefreien Absperrstellung des Hauptkolbens erfolgt.

Bei einer zweckmäßigen Ausführungsform ist der Kraftverlauf der variierenden Kraft derart gewählt, dass bei jedem eingestellten Wert der Bestromung des Proportionalmagneten die Druckdifferenz zwischen der Lastdruckseite und der Niederdruckseite unabhängig von zumindest Änderungen des Lastdrucks und somit die Menge konstant gehalten wird. Über den gesamten Stellhub wird somit optimale Lastdruckunabhängigkeit erzielt.

Bei einer alternativen Ausführungsform wird der Kraftverlauf der variierenden Kraft hingegen derart gewählt, dass die Druckdifferenz zwischen der Lastdruckseite und der Niederdruckseite und somit die Menge unabhängig von zumindest Änderungen des Lastdrucks anwenderspezifischen Anforderungen entsprechend variiert. Dies kann für Anwendungsfälle zweckmäßig sein, bei denen nur über einen Teilbereich des Stellhubs die Menge konstant bleiben soll und darüber hinaus entsprechend den anwenderspezifischen Anforderungen zu regeln ist, oder bei denen über den gesamten Stellhub eine lastunabhängige Mengenregelung entsprechend den anwenderspezifischen Anforderungen zweckmäßig ist. Es kann der Kraftverlauf linear oder entsprechend einer gekrümmten Kurve gewählt werden. Entscheidend ist, dass die Regelung der Menge unabhängig von Änderungen zumindest des Lastdrucks erfolgt.

Abhängig davon, wie der Kraftverlauf gewählt wird, hat der Steuerflächenabschnitt eine geradlinige oder eine konkav gekrümmte oder eine konvex gekrümmte Erzeugende. Der Steuerflächenabschnitt am Pilotkegel kann eine im Querschnitt kreisförmige Verdickung (z.B. konisch) mit allmählich zunehmendem Kreisdurchmesser sein. Dies ist herstellungstechnisch günstig und resultiert in einem wünschenswerten kreisringförmigen Durchfluss durch die Stelldrossel. Die Erzeugende kann sich alternativ auch aus geradlinigen und gekrümmten Abschnitten zusammensetzen.

Zweckmäßig weisen der Anker und die Dichtführung jeweils der Steuerkammer zugewandt einen ersten Dichtabschnitt mit größerem Wirkdurchmesser und der Steuerkammer zugewandt einen zweiten Dichtabschnitt mit kleinerem Wirkdurchmesser auf, wobei der erste Dichtabschnitt des Ankers eine gegenüber der Steuerkammer abgedichtete und mit der Lastdruckseite kommunizierende Ringkammer begrenzt. Die Festdrossel wird zwischen den Dichtabschnitten in der Dichtführung angeordnet, wofür der Anker in dem zweiten Dichtabschnitt einen in Richtung zur Steuerkammer schräg abfallenden Steuerflächenabschnitt aufweist.

Um eine einwandfreie hubabhängige Regelung zu erzielen, kann es zweckmäßig sein, an der zur Steuerkammer weisenden Seite der Festdrossel in der Dichtführung zwischen den ersten und zweiten Dichtabschnitten der Dichtführung eine umlaufende Steuerkante vorzusehen, die mit dem Steuerflächenabschnitt des Ankers die Stelldrossel definiert. Es ergibt sich so eine blendenartige Zusammenwirkung zwischen der Steuerkante und dem Steuerflächenabschnitt des Ankers, die eine exakte Vorbestimmung des hubabhängig variierenden Kraftverlaufes am Anker ermöglicht.

Das Hydrauliksitzventil kann in Blockbauweise als selbständige Hydraulikkomponente ausgebildet sein. Der Vorzug wird jedoch einer Ausführung des Hydrauliksitzventils als Einschraubventilpatrone gegeben, die bei geringem Platzbedarf in einen Block einschraubbar ist, in dem die Anschlüsse an der Lastdruckseite und der Niederdruckseite einander schneiden. Die Einschraubpatrone kann ein den Proportionalmagneten tragendes, eine Kommunikation mit der Niederdruckseite aufweisendes Schraubgehäuse besitzen, in dessen unteres Ende ein den Hauptkolben und den Ventilsitz enthaltender Hülsenkörper eingesetzt ist. Dies ist herstellungstechnisch günstig, weil der Ventilsitz hierbei einwandfrei bearbeitbar und gegebenenfalls separat härtbar ist. Die Dichtführung oder die Trennwand ist in einer Hülse angeordnet, die gegenüber der Steuerkammer abgedichtet im Einschraubgehäuse durch den Hülsenkörper positioniert wird. Es ergibt sich so ein kompaktes Einschraubventil-Konzept des Hydrauliksitzventils, wobei dessen Einzelteile bequem vorfertigbar und präzise bearbeitbar sind, z.B. weitestgehend aus Stahl.

Bei dem in stromlosem Zustand des Proportionalmagneten geschlossenen Hydrauliksitzventil ist die Regelfeder zwischen einem stationären Teil des Proportionalmagneten und einem oberen Flanschende des Pilotkegels angeordnet. Im Anker ist eine Mitnehmerschulter für das, vorzugsweise durchbohrte, Flanschende vorgesehen. Die Regelfeder koppelt den Pilotkegel über die Mitnehmerschulter bewegungsübertragend mit dem Anker. Hingegen kann die Mitnehmerschulter eine relative Abhebebewegung des Pilotkegels beispielsweise in der Absperrstellung relativ zum Anker zulassen. Das durchbohrte Flanschende ermöglicht eine Kommunikation zwischen der Steuerkammer bzw. der Hilfssteuerkammer und dem oberen Ende des Ankers, um den Anker zur Gänze oder zumindest in seinem oberen Endabschnitt druckausgeglichen zu platzieren.

Die Regelfeder kann von außen in ihrer Vorspannung verstellbar untergebracht sein. Eine baulich einfache Lösung sieht vor, zwischen der Regelfeder und dem stationären Teil des Proportionalmagneten und/oder dem Flanschende des Pilotkegels einen austauschbaren Federvorspannungs-Einstellkörper einzusetzen. Soll im letztgenannten Fall die Vorspannung der Regelfeder geändert werden, wird entweder ein zusätzlicher Federvorspannungs-Einstellkörper eingesetzt, oder der eingesetzte gegen einen anderen mit anderer Vorspannwirkung ersetzt. Es ist jedoch nicht auszuschließen, dass die Vorspannung der Regelfeder überhaupt nicht veränderbar ist, sondern beim Hersteller durch Auswahl einer Regelfeder mit entsprechender Kennlinie und Wirklänge vorgegeben wird.

Anhand der Zeichnungen werden Ausführungsformen des Erfindungsgegenstandes erläutert. Es zeigen:
- Fig. 1: einen Längsschnitt einer ersten Ausführungsform eines Hydrauliksitzventils,
- Fig. 2: einen Längsschnitt einer weiteren Ausführungsform des Hydrauliksitzventils, und
- Fig. 3: ein schematisches Diagramm zur Verdeutlichung bevorzugter Kennlinien des Hydrauliksitzventils der Fig. 1 oder Fig. 2.

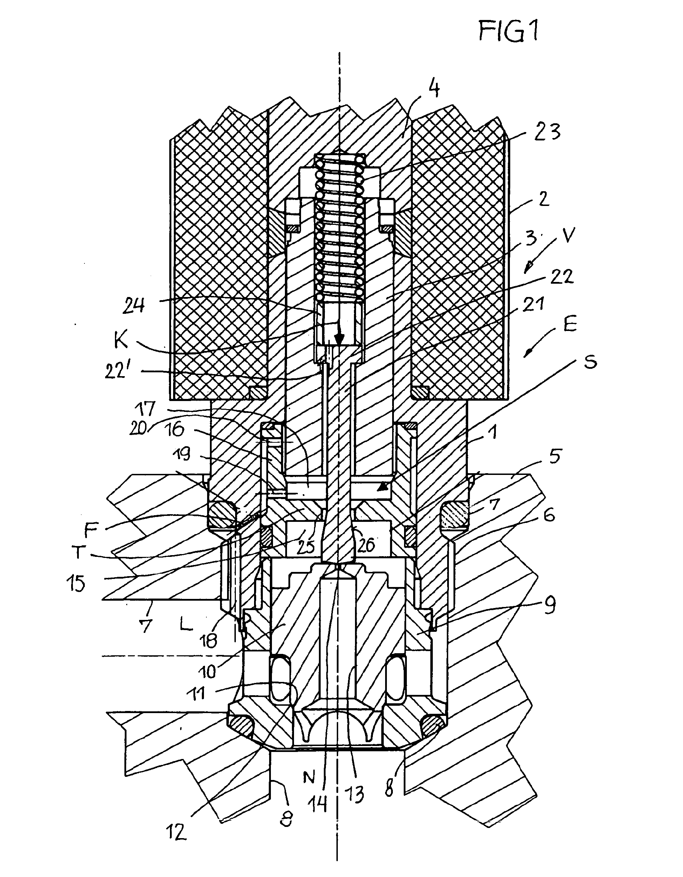

Die Fig. 1 und Fig. 2 zeigen Hydrauliksitzventile V in zwei unterschiedlichen Ausführungsformen, wie sie beispielsweise in Hubmodulen von Flurförderfahrzeugen zur Senksteuerung verwendbar sind, um die Geschwindigkeit einer Last beim Senken unabhängig von zumindest Variationen des Lastdrucks nur entsprechend des Wertes der Bestromung feinfühlig zu regeln (lastunabhängige Mengenregelung).

Obwohl das Hydrauliksitzventil V in herkömmlicher Blockbauweise als selbständige Hydraulikkomponente gestaltet sein könnte, ist in den Fig. 1 und 2 das jeweilige Hydrauliksitzventil V als Einschraubventilpatrone E dargestellt, die mit einem den Proportionalmagneten 2 tragenden Einschraubkörper 1 in eine Stufenbohrung 6 (mit einem Innengewindeabschnitt) eines Blocks 5 eingeschraubt wird, in welchem sich Kanäle 7, 8 (Lastdruckseite L und Niederdruckseite N) schneiden.

Der Proportionalmagnet 2 weist einen Anker 3 auf, der sich bei Bestromung relativ zu einem stationären Magnetteil 4 aus der in Fig. 1 gezeigten Stellung nach oben bewegt und dabei eine vom Wert der Bestromung abhängige Kraft entwickelt. Der Einschraubkörper 1 wird in zwei axial beabstandeten Dichtbereichen 7, 8 abgedichtet und enthält im unteren Ende einen eingesetzten und abgedichteten Hülsenkörper 9, in dem ein Hauptkolben 10 axial und abgedichtet verschiebbar ist. Der Hauptkolben 10 besitzt eine Dichtfläche 11, die in der gezeigten Ausführungsform aus einer konischen Dichtfläche und z.B. einem in einen Ventilsitz 12 des Hülsenkörpers 9 eintauchenden, zylindrischen Mengenregelabschnitt besteht. Der Hauptkolben 10 weist eine Bohrung 13 auf, die zu einem oben liegenden Pilotsitz 14 mit einer vorbestimmten Querschnittsgröße führt. Oberhalb des Hauptkolbens 10 ist eine Steuerkammer 15 vorgesehen, die durch eine Trennwand T in einer Hülse 16 begrenzt wird, die im Einschraubkörper 1 abgedichtet untergebracht und durch den Hülsenkörper 9 positioniert ist.

Im Einschraubkörper 1 ist eine Kommunikationsverbindung 18 zur Lastdruckseite L geformt, in deren Verlauf eine Festdrossel F einer bestimmten Querschnittsgröße angeordnet ist. Die Querschnittsgröße der Festdrossel F ist kleiner als die Querschnittsgröße des Pilotsitzes 14. Das untere Ende des Ankers 3 taucht lose in die Hülse 16 ein und begrenzt mit der Trennwand T eine Hilfssteuerkammer 17, die über zumindest einen seitlichen Durchgang 19 mit der Festdrossel F kommuniziert. In der Hülse 16 kann optional ein weiterer seitlicher Durchgang 20 zwischen der Festdrossel F und der Hilfssteuerkammer 17 vorgesehen sein.

In einer mit Übermaß ausgebildeten Innenbohrung des Ankers 3 ist ein stößelförmiger Pilotkegel 21 angeordnet, der am oberen Ende einen, vorzugsweise durchbohrten, Endflansch 22 zur Zusammenwirkung mit einer Mitnehmerschulter 22' im Anker 3 besitzt. Der Endflansch 22 wird durch eine Regelfeder 23 in Richtung nach unten beaufschlagt, die sich an dem stationären Magnetkörper 4 abstützt. Gegebenenfalls ist ein Regelfeder-Vorspannungs-Einstellkörper 24, z.B. eine Hülse, zwischen dem Endflansch 22 und der Regelfeder 23 oder zwischen der Regelfeder 23 und dem stationären Magnetkörper 4 eingesetzt. Der durchbohrte Endflansch 22 ermöglicht eine Kommunikationsverbindung, die für einen Druckausgleich des Ankers 3 bezüglich des Drucks in der Hlfssteuerkammer 17 sorgt.

Zwischen der Festdrossel F bzw. der Hilfssteuerkammer 17 und der Steuerkammer 15 ist eine Stelldrossel S vorgesehen, deren Größe von der relativen Hubstellung des Pilotkegels 21 und des Ankers 3 in Bezug auf beispielsweise den Ventilsitz 12 abhängt. In der Ausführungsform in Fig. 1 wird die Stelldrossel S durch einen Durchgang 25 in der Trennwand T und einem Steuerflächenabschnitt 26 am Pilotkegel 21 gebildet, der den Durchgang 25 zur Zusammenwirkung mit dem Pilotsitz 14 durchsetzt. Der Steuerflächenabschnitt 26 ist in Fig. 1 relativ zur Achse des Pilotkegels und in Richtung zum Pilotsitz 14 schräg ansteigend ausgebildet. Beispielsweise ist der Steuerflächenabschnitt 26 eine annähernd konische Verdickung des im Querschnitt runden Pilotkegels 21.

Die Erzeugende des Steuerflächenabschnittes 26 kann eine Gerade sein oder eine konvex oder konkav gekrümmte Kurve, oder ist aus geradlinigen und gekrümmten Abschnitten zusammengesetzt.

Je höher der Pilotkegel 21 (und der Anker 3) bei bestromtem Proportionalmagneten 2 gegenüber der in Fig. 1 gezeigten, leckagefreien Absperrstellung des Hydrauliksitzventils V nach oben bewegt wird, desto enger wird der Querschnitt der Stelldrossel S, um bei geöffnetem Pilotventil und sinkendem Druck in der Steuerkammer 15 aus dem Druck in der Hilfssteuerkammer 17, wie eingestellt über die Festdrossel F, hydraulisch eine variierende Kraft K zu erzeugen, die am Anker 3 in Schließrichtung wirkt. Die Kraft K erzeugt am Anker 3 des bestromten Proportionalmagneten 2 eine Rückmeldung zum Lastdruck an der Lastdruckseite L, so dass der Proportionalmagnet 2 unter Nutzen dieser Rückmeldung als weiteren Regelparameter bei geöffnetem Pilotventil gegen die Regelfeder 23 eine exakte Mengenregelung unabhängig vom Lastdruck ausführt.

Bei Hydrauliksitzventilen des Standes der Technik waren nämlich nach Öffnen des Pilotventils der Pilotkegel und der Anker im Wesentlichen axialkraftfrei, so dass die Regelung nur aus dem Zusammenspiel der am Anker vom Proportionalmagneten erzeugten Kraft und der Kraft der Regelfeder erfolgte, ohne den momentanen Wert des Lastdrucks oder der Druckdifferenz zwischen dem Lastdruck und der Niederdruckseite nennenswert zu berücksichtigen. Die variierende Kraft K beim erfindungsgemäßen Hydrauliksitzventil V ermöglicht hingegen als zusätzlicher Regelparameter unabhängig vom Lastdruck oder von Lastdruckänderungen eine präzisere Mengenregelung.

### Funktion:

In der gezeigten Absperrstellung des Hydrauliksitzventils S in Fig. 1 (stromloser Zustand) wird der Pilotsitz 14 vom unteren Ende des Pilotkegels 21 verschlossen. Der über die Festdrossel F und die weit geöffnete Stelldrossel S in der Steuerkammer 15 aus dem Lastdruck aufgebaute Druck drückt den Hauptkolben 10 auf den Ventilsitz 12, so dass das Hydrauliksitzventil leckagefrei zwischen der Lastdruckseite L und der Niederdruckseite N abdichtet.

Wird der Proportionalmagnet 2 nun mit einem gewählten Stromwert bestromt, beispielsweise durch Überführen eines Joysticks der elektronischen Steuerung eines Hubmoduls in eine bestimmte Auslenkstellung, die einer bestimmten Senkgeschwindigkeit eines Hubzylinders bedeuten soll, dann generiert der Anker 3 gegen die Regelfeder 23 eine nach oben gerichtete Zugkraft, wodurch der Pilotkegel 21 vom Pilotsitz 14 abgehoben wird, und der Druck in der Steuerkammer 15 zur Niederdruckseite N abfällt. Gleichzeitig verengt sich der Querschnitt der Stelldrossel S, so dass die Kraft K mit einem der Hubstellung des Pilotkegels 21 bzw. des Ankers 3 entsprechenden Wert entsteht. Da der Lastdruck L am Hauptkolben 10 auf einem Kreisringquerschnitt wirkt, der durch den Außendurchmesser des Hauptkolbens 10 und den Durchmesser des Ventilsitzes 12 definiert ist, wird der Hauptkolben 11 vom Ventilsitz 12 abgehoben. Druckmittel strömt von der Lastdruckseite L zur Niederdruckseite N. Der Hauptkolben 10 nähert sich dem Pilotkegel 21, so dass der Pilotsitz 14 abdrosselt oder verschlossen wird, und sich ein Gleichgewichtszustand zwischen der Kraft K, der Kraft der Regelfeder 23 und der Kraft des Ankers 3 einstellt, und eine Druckdifferenz zwischen dem Lastdruck L und der Niederdruckseite N entsteht, die einer bestimmten Menge und damit der gewünschten Geschwindigkeit des Hydroverbrauchers entspricht. Der Wert der Druckdifferenz wird nun z.B. durch die Regelung unabhängig von zumindest Änderungen des Lastdrucks konstant gehalten. Steigt der Lastdruck (Vergrößerung der Druckdifferenz zwischen L und N), dann nimmt die Kraft K zu, und steigt der Druck in der Steuerkammer 15, so dass der Hauptkolben 10 am Ventilsitz 12 stärker abdrosselt und die Menge konstant hält. Sinkt der Lastdruck, dann nimmt die Kraft K ab, und wird der Druck in der Steuerkammer 15 geringer, so dass der Hauptkolben 10 am Ventilsitz 12 weniger abdrosselt und wiederum die Menge konstant gehalten wird.

Wird der Stromwert der Bestromung des Proportionalmagneten 2 auf einen neuen, höheren Wert gesteigert, dann drosselt die Stelldrossel S weiter ab, so dass die Kraft K anwächst, bis sich erneut ein Gleichgewichtszustand zwischen der Kraft der Regelfeder 23 und der dann auch höheren Kraft des Ankers 3 einstellt, und auch für den neuen Stromwert wieder die vom Lastdruck unabhängige Mengenregelung für nun eine größere Menge oder eine andere Druckdifferenz zwischen dem Lastdruck L und dem Druck an der Niederdruckseite N erfolgt.

Umgekehrt wird bei einer Verringerung des Stromwerts der Bestromung des Proportionalmagneten 2 auf einen neuen Wert die Kraft K verringert, weil die Regelfeder 23 den Pilotkegel 21 weiter nach unten schiebt, bis sich ein neuer Wert der Druckdifferenz zwischen dem Lastdruck und dem Druck an der Niederdruckseite N einstellt und die Menge unter Berücksichtigung der Kraft K konstant gehalten wird. Die variierende Kraft K wird in Schließrichtung in Fig. 1 am Pilotkegel 21 direkt hydraulisch erzeugt und über den Endflansch 22 und die Mitnehmerschulter 22' im Anker 3 auf den Anker 3 übertragen.

Die Ausführungsform in Fig. 2 (ebenfalls stromlos leckagefrei zu) unterscheidet sich von der der Fig. 1 dadurch, dass die variierende Kraft K direkt am Anker 3 des Proportionalmagneten 2 erzeugt wird. Zu diesem Zweck ist die Stelldrossel S zwischen dem Anker 3 und der Hülse 16' und so ausgebildet, dass der Durchgangsquerschnitt der Stelldrossel nur von der Hubstellung des Ankers 3 bei bestromtem Proportionalmagneten 2 abhängt.

Die Festdrossel F mündet in Fig. 2 beispielsweise in der Hülse 16' im Bereich einer Schulter 29 zwischen einem oben liegenden ersten Dichtabschnitt 26 mit größerem Wirkdurchmesser und einem unteren zweiten Dichtabschnitt 27 mit kleinerem Wirkdurchmesser, jeweils in der Hülse 16'. In diesem Bereich ist in der Hülse 16' innen eine Steuerkante 31 vorgesehen. In der Hülse 16' verbindet ferner unter Umgehen der Festdrossel F ein seitlicher Durchgang 22 die Lastdruckseite L mit einer Ringkammer 25, die von einem oben liegenden Abschnitt des Ankers 3, dem Einschraubkörper 1 und dem oberen ersten Dichtabschnitt 26 der Hülse 16' begrenzt ist. Der Zweck des Durchgangs 20 ist unter anderem ein Druckausgleich bezüglich des Lastdrucks bzw. des Drucks in der Steuerkammer 15, in die das untere Ende des Ankers 3 eintaucht für den oberen Teil des Ankers 3.

Am Anker 3 ist ebenfalls ein oberer erster Dichtabschnitt 30 mit größerem Wirkdurchmesser und ein der Steuerkammer 15 zugewandter unterer zweiter Dichtabschnitt 28 mit kleinerem Wirkdurchmesser vorgesehen, zwischen denen eine konische Schulter geformt sein kann. Die Dichtabschnitte 30, 28 am Anker 3 wirken jeweils mit den Dichtabschnitten 26 und 27 der Hülse 16' zusammen. Im Dichtabschnitt 28 des Ankers 3 ist ein Steuerflächenabschnitt 26' vorgesehen, der sich beispielsweise als geradlinig oder gekrümmt in Richtung zum Hauptkolben 10 abfallende Längsrille oder Steuerkerbe (alternativ eine konische Fläche) darstellt, und mit der Steuerkante 31 blendenartig zusammenwirkt. Die Stelldrossel S wird durch die Steuerkante 31 und den Steuerflächenabschnitt 26' direkt stromab der Festdrossel F gebildet.

Wird bei bestromtem Proportionalmagneten 2 der Pilotkegel 21 vom Anker 3 in Öffnungsrichtung vom Pilotsitz abgehoben, dann sinkt wegen der sich öffnenden Stelldrossel S und der Festdrossel F der Druck in der Steuerkammer 15 relativ zum Druck in der Ringkammer 25. Somit entsteht über die Stelldrossel S die variierende, und in Schließrichtung orientierte Kraft K direkt am Anker 3, da der Lastdruck in der Ringkammer 25 auf einer Kreisringfläche zwischen dem kleineren Querschnitt des oberen Endes des Ankers 3 und dem größeren Querschnitt des Dichtabschnitts 30 nach unten wirkt, während der über die Festdrossel F und den momentanen Querschnitt der Stelldrossel S gegenüber dem Lastdruck verringerte Druck in der Steuerkammer 15 auf derselben Kreisringfläche nach oben wirkt. Die aus dem Lastdruck die variierende Kraft K erzeugende Druckdifferenz entsteht dadurch, dass die Festdrossel F und die Stelldrossel S zur druckentlasteten Steuerkammer 15 abdrosseln, während die Ringkammer 25 unter Umgehung der Festdrossel F direkt mit dem Lastdruck beaufschlagt wird, so dass der Anker 3 die Menge von L nach N über den Hauptkolben 10 lastunabhängig regelt, da der Wert der Kraft K zum Lastdruck proportional ist.

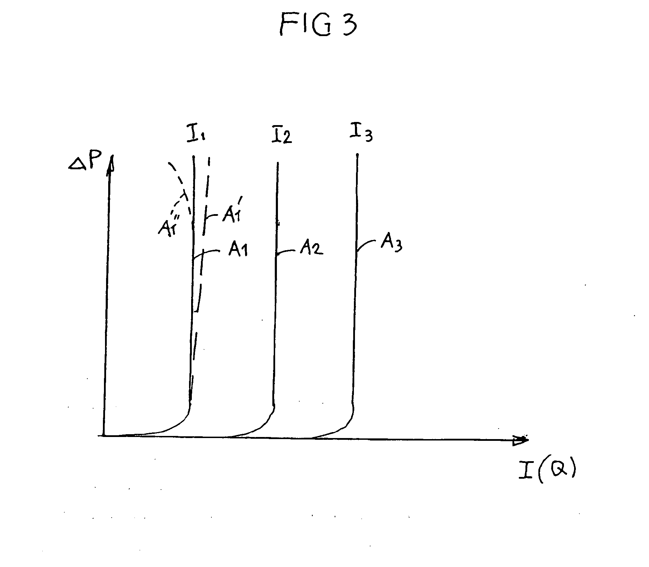

Im Schaubild der Fig. 3 repräsentiert die vertikale Achse die Druckdifferenz AP zwischen der Lastdruckseite L und der Niederdruckseite N, während die horizontale Achse die Bestromung I des Proportionalmagneten 2 zeigt (indirekt auch die von der Lastdruckseite L zur Niederdruckseite N geregelte Strömungsrate Q). Es sind in Fig. 3 als Beispiele drei Werte 11, 12, 13 der Bestromung angedeutet, denen jeweils eine Kurve A1, A2, A3 mit weitestgehend vertikalem und geradlinigem Verlauf zugeordnet ist, die die lastunabhängig geregelten Mengen für die Werte I1, I2, I3 der Bestromung darstellen. Unabhängig vom Wert der Druckdifferenz ΔP wird die Menge konstant gehalten.

Falls eine vom Lastdruck unabhängige Regelung entsprechend anwenderspezifischen Anforderungen gewünscht ist, kann durch die entsprechende Gestaltung der Stelldrossel S bzw. Wahl des Verlaufs der Kraft K über den Stellhub anstelle beispielsweise der Kurve A1 mit linearem vertikalen Verlauf eine Kurve A1' mit linearem aber geneigtem Verlauf eingestellt werden, oder sogar eine gekrümmte Kurve A1', und zwar beispielsweise durch die Gestalt des jeweiligen Steuerflächenabschnittes 26 oder 26'. In jedem Fall wird bei der Regelung dem Proportionalmagneten 2 die Rückmeldung zum momentanen Lastdruck über die mit der Stelldrossel S variierende Kraft K gegeben, um die Menge unabhängig vom Lastdruck zu regeln.

## Patentansprüche

1. Hydrauliksitzventil (V), insbesondere Senkventil für Hubmodule, mit einem Ventilsitz (12) zwischen einer Lastdruckseite (L) und einer Niederdruckseite (N), einem mit dem Ventilsitz (12) zusammenwirkenden, eine Sitzfläche (11) aufweisenden Hauptkolben (10), der in einer Steuerkammer (15) das Hydrauliksitzventils (V) aus einer leckagefreien Absperrstellung am Ventilsitz abgedichtet verschiebbar ist, einem aus einem Pilotsitz (14) im Hauptkolben (10) und einem mit dem Pilotsitz (14) zusammenwirkenden Pilotkegel (21) bestehenden Pilotventil zwischen der Steuerkammer (15) und der Niederdruckseite (N), einer den Pilotkegel (21) beaufschlagenden Regelfeder (23), und einem das Pilotventil betätigenden Proportionalmagneten (2) mit einem Anker (3), der bei bestromtem Proportionalmagneten (2) in zumindest einer Stellrichtung seines Stellhubs gegenüber einer Ausgangsstellung mit dem Pilotkegel (21) koppelbar ist, wobei zwischen der Lastdruckseite (L) und der Steuerkammer (15) eine Strömungsverbindung (18) mit einer Festdrossel (F) vorgesehen ist, **dadurch gekennzeichnet, dass** zwischen der Festdrossel (F) und der Steuerkammer (15) eine Stelldrossel (S) vorgesehen ist, deren Größe bei geöffnetem Pilotventil über den Stellhub des Ankers (3) variabel ist, und die aus dem Lastdruck am Anker (3) hydraulisch direkt oder über den Pilotkegel (21) eine die Positionen des Ankers (3) und des Hauptkolbens (10) beeinflussende, variierende und von der Druckdifferenz (ΔP) zwischen der Lastdruckseite (L) und der Niederdruckseite (N) abhängige Kraft (K) erzeugt und dass entweder zwischen dem Anker (3) und der mit der Festdrossel (F) kommunizierenden, ein Ende des Ankers (3) aufnehmenden Steuerkammer (15) eine Hilfssteuerkammer (17) vorgesehen ist, die von der Steuerkammer (15) durch eine Trennwand (T) separiert und vom Anker (3) begrenzt wird, wobei die Trennwand (T) einen Durchgang (25) enthält, durch den sich der Pilotkegel (21) bis in die Steuerkammer (15) erstreckt, wobei der Pilotkegel (21) einen Steuerflachenabschnitt (26) aufweist, welcher in Richtung zum Pilotsitz (14) und relativ zur Achse des Pilotkegels (21) allmählich ansteigt, und wobei die Stelldrossel (S) durch den Steuerflächenabschnitt (26) und den Durchgang (25) definiert ist, oder dass sich der Anker (3) bis in die Steuerkammer (15) erstreckt und mit wenigstens einem Dichtabschnitt (28, 30) in einem stationären, die Steuerkammer (15) begrenzenden und mit der Festdrossel (F) kommunizierenden Dichtabschnitt (26, 27) abgedichtet verschiebbar ist, und die Stelldrossel (S) zwischen den Dichtabschnitten definiert wird.

2. Hydrauliksitzventil nach Anspruch 1, **dadurch gekennzeichnet, dass** die Regelfeder (23) den Pilotkegel (21) in Schließrichtung des Pilotventils beaufschlagt, dass der bestromte Proportionalmagnet (2) über den Anker (3) den Pilotkegel (21) in Öffnungsrichtung des Pilotventils beaufschlagt, und dass die über die Stelldrossel (S) hydraulisch erzeugte Kraft (K) am Anker (3) in Schließrichtung wirkt.

3. Hydrauliksitzventil nach Anspruch 1, **dadurch gekennzeichnet, dass** die Regelfeder den Pilotkegel in Öffnungsrichtung des Pilotventils beaufschlagt, dass der bestromte Proportionalmagnet über den Anker den Pilotkegel in Schließrichtung des Pilotventils beaufschlagt, und dass die mit der Stelldrossel (S) hydraulisch erzeugte Kraft (K) am Anker (3) in Öffnungsrichtung des Pilotventils wirkt.

4. Hydrauliksitzventil nach wenigstens einem der vorhergehenden Ansprüche, **dadurch gekennzeichnet, dass** der Verlauf der variierenden Kraft (K) derart gewählt ist, dass bei jedem eingestellten Wert (I1, I2, I3) der Bestromung (I) des Proportionalmagneten (2) die strömende Menge zwischen der Lastdruckseite (L) und der Niederdruckseite (N) unabhängig von zumindest Änderungen des Lastdrucks konstant haltbar ist.

5. Hydrauliksitzventil nach wenigstens einem der Ansprüche 1 bis 3, **dadurch gekennzeichnet, dass** der Verlauf der variierenden Kraft (K) derart gewählt ist, dass bei jedem eingestellten Wert (I1, I2, I3) der Bestromung (I) des Proportionalmagneten (2) die strömende Menge zwischen der Lastdruckseite und der Niederdruckseite unabhängig von zumindest Änderungen des Lastdrucks anwenderspezifisch regelbar ist.

6. Hydrauliksitzventil nach Anspruch 1, **dadurch gekennzeichnet, dass** der Steuerflächenabschnitt (26) am Pilotkegel (21) eine geradlinige oder eine konkav gekrümmte oder eine konvex gekrümmte Erzeugende besitzt.

7. Hydrauliksitzventil nach Anspruch 1, **dadurch gekennzeichnet, dass** bei sich bis in die Steuerkamme (15) erstreckendem Anker (3) der Anker (3) und eine Führungsbohrung jeweils der Steuerkammer (15) abgewandt einen ersten Dichtabschnitt (26, 30) mit größerem Wirkdurchmesser und der Steuerkammer (15) zugewandt einen zweiten Dichtabschnitt (27, 28) mit kleinerem Wirkdurchmesser aufweisen, dass der erste Dichtabschnitt (30) des Ankers (3) eine gegenüber der Steuerkammer (15) abgedichtete und mit der Lastdruckseite (L) kommunizierende Ringkammer (25) begrenzt, dass die Festdrossel (F) zwischen den ersten und zweiten Dichtabschnitten (26, 27) in die Führungsbohrung mündet, und dass der Anker (3) in dem zweiten Dichtabschnitt (28) einen in Richtung zur Steuerkammer (15) schräg abfallenden Steuerflächenabschnitt (26') aufweist.

8. Hydrauliksitzventil nach Anspruch 7, **dadurch gekennzeichnet, dass** an der zur Steuerkammer (15) weisenden Seite der Festdrossel (F) in der Führungsbohrung zwischen den ersten und zweiten Dichtabschnitten (26, 27) eine umlaufende Steuerkante (31) vorgesehen ist, die mit dem Steuerflächenabschnitt (26') des Ankers (3) die blendenartig ausgebildete Stelldrossel (S) definiert.

9. Hydrauliksitzventil nach wenigstens einem der vorhergehenden Ansprüche, **dadurch gekennzeichnet, dass** das Hydrauliksitzventil (V) eine Einschraubventilpatrone (E) mit einem den Proportionalmagneten (2) tragenden, eine Strömungsverbindung (18) zur Lastdruckseite (L) aufweisenden Schraubgehäuse (1) ist, in dessen unteres Ende ein den Hauptkolben (10) enthaltender und den Ventilsitz (12) bildender Hülsenkörper (9) eingesetzt ist, und dass die Führungsbohrung oder die Trennwand (T) in einer Hülse (16, 16') angeordnet ist, die durch den Hülsenkörper (9) gegenüber der Steuerkammer (15) abgedichtet im Schraubgehäuse (1) positioniert ist.

10. Hydrauliksitzventil nach wenigstens einem der vorhergehenden Ansprüche, **dadurch gekennzeichnet, dass** die Regelfeder (23) zwischen einem stationären Teil (4) des Proportionalmagneten (2) und einem oberen Flanschende (22) des Pilotkegels (21) angeordnet ist, und dass im Anker (3) eine Mitnehmerschulter (22') für das, vorzugsweise durchbohrte, Flanschende (22) vorgesehen ist.

11. Hydrauliksitzventil nach Anspruch 10, **dadurch gekennzeichnet, dass** zwischen der Regelfeder (23) und dem stationären Teil (4) des Proportionalmagneten (2) und/oder dem Flanschende (22) des Pilotkegels (21) wenigstens ein austauschbarer Federvorspannungs-Einstellkörper (24) eingesetzt ist.

## Claims

1. Hydraulic seat valve (V), particularly load-lowering valve for lifting modules, comprising a valve seat (12) between a load pressure side (L) and low pressure side (N), a main piston (10) having a seat surface (11) and cooperating with the valve seat (12), which main piston is slideable in sealed fashion in a control chamber (15) of the hydraulic seat valve (V) out of a leakage-free blocking position at the valve seat, a pilot valve between the control chamber (15) and the low pressure side (N), the pilot valve consisting of a pilot valve seat (14) in the main piston (10) and a pilot cone (21) cooperating with the pilot valve seat (14), a regulating spring (23) actuating the pilot cone (21), and a proportional solenoid (2) for actuating the pilot valve, the proportional solenoid (2) having an armature (3) which in case of current supplied to the proportional solenoid (2) can be coupled with the pilot cone (21), in at least one actuating direction of its actuating stroke relative to a home position, wherein a flow connection (18) including a fixed aperture (F) is provided between the load pressure side (L) and the control chamber (15), **characterized in that** an adjustable aperture (S) is provided between the fixed aperture (F) and the control chamber (15), the size of which adjustable aperture (S) is variable over the actuating stroke of the armature (3) when the pilot valve has opened, the adjustable aperture (S) generating from the load pressure either hydraulically directly or via the pilot cone (21) a varying force (K) which force influences the positions both of the armature (3) and of the main piston (10) and depends from the pressure difference (ΔP) between the load pressure side (L) and the low pressure side (N), and that either an auxiliary control chamber (17) is provided between the armature (3) and the control chamber (15) which control chamber (15) communicates with the fixed aperture (F) and accomodates one end of the armature (3), the auxiliary control chamber (17) being separated from the control chamber (15) by a separation wall (T) and bounded by the armature (3), the separation wall (T) containing a passage (25) through which the pilot cone (21) extends into the control chamber (15), the pilot cone (21) having a control surface section (26) gradually rising in the direction towards the pilot valve seat (14) and relative to the axis of the pilot cone (21), the adjustable aperture (S) being defined by the control surface section (26) and the passage (25), or that the armature (3) extends into the control chamber (18) and is slideable in sealed fashion with at least one sealing section (28, 30) in a stationary sealing section (26, 27) bounding the control chamber (15) and communicating with the fixed aperture (F), the adjustable aperture (S) then being defined between the respective sealing sections.

2. Hydraulic seat valve according to claim 1, **characterized in that** the regulating spring (23) is actuating the pilot cone (21) in closing direction of the pilot valve, that the proportional solenoid (2) when supplied with electric current actuates the pilot cone (20) and the armature (3) in opening direction of the pilot valve, and that the force (K) hydraulically generated via the adjustable aperture (S) is acting on the armature (3) in closing direction.

3. Hydraulic seat valve according to claim 1, **characterized in that** the regulating spring (23) is actuating the pilot cone in opening direction of the pilot valve, that the proportional solenoid when supplied with electric current is actuating the pilot cone and the armature in closing direction of the pilot valve, and that the force (K) hydraulically generated via the adjustable aperture (S) is acting at the armature (3) in opening direction of the pilot valve.

4. Hydraulic seat valve according to at least one of the preceding claims, **characterized in that** the course of the varying force (K) is selected such that with each set value (I1, I2, I3) of the electric current (I) supplied to the proportional solenoid (2) the quantity of hydraulic medium flowing between the load pressure side (L) and the low pressure side (N) can be maintained constant irrespective of at least variations of the load pressure.

5. Hydraulic seat valve according to at least one of claims 1 to 3, **characterized in that** the course of the varying force (K) is selected such that with each set value (11, I2, I3) of the electric current (I) supplied to the proportional solenoid (2) the quantity of hydraulic medium flowing between the load pressure side (L) and the low pressure side (N) can be regulated specifically according to requirements of the user irrespective of at least variations of the load pressure.

6. Hydraulic seat valve according to claim 1, **characterized in that** the control surface section (26) at the pilot cone (21) has a straight or concavely curved or convexly curved generatrix.

7. Hydraulic seat valve according to claim 1, **characterized in that** both the armature (3), which extends into the control chamber (15), and a guiding bore respectively remote from the control chamber (15) comprise a first sealing section (26, 30) facing the control chamber (15) having a larger effective diameter and a second sealing section (27, 28) having a smaller effective diameter, that the first sealing section (30) of the armature (3) is bounding a ring chamber (25) which is sealed toward the control chamber (15) and communicates with the load pressure side (L), that the fixed aperture (F) opens into the guiding bore between the first and second sealing sections (26, 27), and that the armature (3) has a control surface section (26') within the sealing section (28) which control surface section (26') obliquely descends in a direction toward the control chamber (15).

8. Hydraulic seat valve according to claim 7, **characterized in that** at the side of the fixed aperture (F) facing to the control chamber (15) and between the first and seconds sealing section (26, 27), a circumferential control edge (31) is provided in the guiding bore, which control edge (31) by co-action with the control surface section (26') of the armature (3) is defining the aperture like formed adjustable aperture (S).

9. Hydraulic seat valve according to at least one the preceding claims, **characterized in that** the hydraulic seat valve (V) is a screw-in-valve cartridge (E) having a screw-in-housing (1) which carries the proportional solenoid (2) and contains a flow connection (18) to the load pressure side (L), that a sleeve body (9) is inserted into the lower end of the screw-in-housing (1), the sleeve body (9) containing the main piston (10) and forming the valve seat (12), and that the guide bore or the separation wall (T) is arranged in collar (16, 16') which is positioned in the screw-in-housing (1) and is sealed against the control chamber (15) by the sleeve body (9).

10. Hydraulic seat valve according to at least one the preceding claims, **characterized in that** the regulating spring (23) is arranged between a stationary part (4) of the proportional solenoid (2) and an upper flange end (22) of the pilot cone (21), and that a retainer shoulder (22') for the flange end (22) is provided in the armature (3), the flange end (22), preferably, being penetrated by a bore.

11. Hydraulic seat valve according to claim 10, **characterized in that** at least one exchangeable spring load adjusting body (24) is inserted between the regulating spring (23) and the stationary part (4) of the proportional solenoid (2) and/or flange end (22) of the pilot cone (21).

## Revendications

1. Soupape hydraulique à siège (V), en particulier soupape d'abaissement pour modules de levage, comprenant un siège de soupape (12) entre un côté pression de charge (L) et un côté basse pression (N), un piston principal (10), qui coopère avec le siège de soupape (12), présente une surface de contact (11), et peut être déplacé de façon étanche dans une chambre de commande (15) de la soupape hydraulique à siège (V) à partir d'une position de fermeture sans fuite sur le siège de soupape, une soupape pilote, constituée d'un siège pilote (14) dans le piston principal (10) et d'un cône pilote (21) coopérant avec le siège pilote (14), entre la chambre de commande (15) et le côté basse pression (N), un ressort de réglage (23) sollicitant le cône pilote (21), et un aimant proportionnel (2) actionnant la soupape pilote avec un induit (3), qui peut être couplé au cône pilote (21), lorsque l'aimant proportionnel (2) est alimenté en courant, dans au moins une direction de réglage de sa course par rapport à une position initiale, une liaison d'écoulement (18) avec un étranglement fixe (F) étant prévue entre le côté pression de charge (L) et la chambre de commande (15), **caractérisée en ce qu'**il est prévu un étranglement de réglage (S) entre l'étranglement fixe (F) et la chambre de commande (15), dont la dimension est variable, en position d'ouverture de la soupape pilote, par l'intermédiaire de la course de réglage de l'induit (3), et qui génère par voie hydraulique, à partir de la pression de charge, sur l'induit (3), directement ou par l'intermédiaire du cône pilote (21), une force (K) variable, influant sur les positions de l'induit (3) et du piston principal (10), et dépendante de la différence de pression (Δp) entre le côté pression de charge (L) et le côté basse pression (N), et que soit il est prévu une chambre de commande auxiliaire (17) entre l'induit (3) et la chambre de commande (15), qui communique avec l'étranglement fixe (F) et reçoit une extrémité de l'induit (3), laquelle chambre auxiliaire est séparée de la chambre de commande (15) par une cloison (T) et est délimitée par l'induit (3), la cloison (T) comportant un passage (25), au travers duquel le cône pilote (21) s'étend jusque dans la chambre de commande (15), le cône pilote (21) présentant une section de surface de commande (26), qui augmente graduellement en direction du siège pilote (14) et par rapport à l'axe du cône pilote (21), et l'étranglement de réglage (S) étant défini par la section de surface de commande (26) et par le passage (25), soit que l'induit (3) s'étend jusque dans la chambre de commande (15) et est mobile de façon étanche, par au moins une section d'étanchéité (28, 30), dans une section d'étanchéité (26, 27) stationnaire, délimitant la chambre de commande (15) et communiquant avec l'étranglement fixe (F), et l'étranglement de réglage (S) est défini entre les sections d'étanchéité.

2. Soupape hydraulique à siège selon la revendication 1, **caractérisée en ce que** le ressort de réglage (23) sollicite le cône pilote (21) dans la direction de fermeture de la soupape pilote, que l'aimant proportionnel (2) alimenté en courant sollicite par l'intermédiaire de l'induit (3) le cône pilote (21) dans la direction d'ouverture de la soupape pilote, et que la force (K), générée par voie hydraulique par l'intermédiaire de l'étranglement de réglage (S), agit sur l'induit (3) dans la direction de fermeture.

3. Soupape hydraulique à siège selon la revendication 1, **caractérisée en ce que** le ressort de réglage sollicite le cône pilote dans la direction d'ouverture de la soupape pilote, que l'aimant proportionnel alimenté en courant sollicite par l'intermédiaire de l'induit le cône pilote dans la direction de fermeture de la soupape pilote, et que la force (K), générée par voie hydraulique par l'étranglement de réglage (S), agit sur l'induit (3) dans la direction d'ouverture de la soupape pilote.

4. Soupape hydraulique à siège selon l'une au moins des revendications précédentes, **caractérisée en ce que** l'allure de la force variable (K) est choisie de telle sorte que, pour chaque valeur réglée (I1, 12, 13) de l'alimentation en courant (I) de l'aimant proportionnel (2), le débit d'écoulement entre le côté pression de charge (L) et le côté basse pression (N) peut être maintenu constant indépendamment d'au moins de variations de la pression de charge.

5. Soupape hydraulique à siège selon l'une au moins des revendications 1 à 3, **caractérisée en ce que** l'allure de la force variable (K) est choisie de telle sorte que, pour chaque valeur réglée (I1, 12, 13) de l'alimentation en courant (I) de l'aimant proportionnel (2), le débit d'écoulement entre le côté pression de charge et le côté basse pression est réglable de façon spécifique à l'utilisateur indépendamment d'au moins de variations de la pression de charge.

6. Soupape hydraulique à siège selon la revendication 1, **caractérisée en ce que** la section de surface de commande (26) sur le cône pilote (21) présente une génératrice rectiligne ou de courbure concave ou de courbure convexe.

7. Soupape hydraulique à siège selon la revendication 1, **caractérisée en ce que**, avec un induit (3) s'étendant jusque dans la chambre de commande (15), l'induit (3) et un alésage de guidage présentent respectivement, opposée à la chambre de commande (15), une première section d'étanchéité (26, 30) de diamètre actif plus grand et, tournée vers la chambre de commande (15), une seconde section d'étanchéité (27, 28) de diamètre actif plus petit, que la première section d'étanchéité (30) de l'induit (3) délimite un compartiment annulaire (25) étanchéifié par rapport à la chambre de commande (15) et communiquant avec le côté pression de charge (L), que l'étranglement fixe (F) débouche entre la première et la seconde sections d'étanchéité (26, 27) dans l'alésage de guidage, et que l'induit (3) présente dans la seconde section d'étanchéité (28) une section de surface de commande (26') inclinée en oblique en direction de la chambre de commande (15).

8. Soupape hydraulique à siège selon la revendication 7, **caractérisée en ce qu'**il est prévu dans l'alésage de guidage, sur le côté de l'étranglement fixe (F) dirigé en direction de la chambre de commande (15), entre la première et la seconde sections d'étanchéité (26, 27), une arête de commande (31) périphérique qui définit, avec la section de surface de commande (26') de l'induit (3), l'étrangement de réglage (S) réalisé à la manière d'un obturateur.

9. Soupape hydraulique à siège selon l'une au moins des revendications précédentes, **caractérisée en ce que** la soupape hydraulique à siège (V) est une cartouche filetée (E), avec un corps fileté (1) qui supporte l'aimant proportionnel (2) et présente une liaison d'écoulement (18) avec le côté pression de charge (L), corps dans l'extrémité inférieure duquel est mis en place un corps de manchon (9), qui comporte le piston principal (10) et forme le siège de soupape (12), et que l'alésage de guidage ou la cloison (T) est disposé dans un manchon (16, 16'), qui est positionné par le corps de manchon (9) dans le corps fileté (1), de façon étanche par rapport à la chambre de commande (15).

10. Soupape hydraulique à siège selon l'une au moins des revendications précédentes, **caractérisée en ce que** le ressort de réglage (23) est disposé entre une partie stationnaire (4) de l'aimant proportionnel (2) et une extrémité de bride supérieure (22) du cône pilote (21), et qu'un épaulement d'entraînement (22') est prévu dans l'induit (3) pour l'extrémité de bride (22), de préférence percée.

11. Soupape hydraulique à siège selon la revendication 10, **caractérisée en ce qu'**au moins un corps de réglage de précontrainte de ressort (24) interchangeable est mis en place entre le ressort de réglage (23) et la partie stationnaire (4) de l'aimant proportionnel (2) et/ou l'extrémité de bride (22) du cône pilote (21).
